# EUROPÄISCHE PATENTSCHRIFT

(11) **EP 3 918 254 B1**
(45) Veröffentlichungstag und Bekanntmachung des Hinweises auf die Patenterteilung: **01.05.2024**
(21) Anmeldenummer: 20702762.4
(22) Anmeldetag: 27.01.2020
(51) Int. Cl.: F24D 17/00, F24D 17/02, F25B 30/00, C02F 1/44, C02F 3/12, C02F 103/00, E03C 1/00, C02F 1/02, F25B 30/02, F25B 30/06

(54) **WÄRMEÜBERTRAGUNGSVORRICHTUNG**
HEAT TRANSFER DEVICE
DISPOSITIF DE TRANSFER DE CHALEUR

(30) Priorität: 30.01.2019 AT 500772019
(43) Veröffentlichungstag der Anmeldung: 08.12.2021
(73) Patentinhaber: GEBE Gesellschaft m.b.H., 2700 Wiener Neustadt (AT)
(72) Erfinder: HUBER, Walter, 2604 Theresienfeld (AT)
(74) Vertreter: Gibler & Poth Patentanwälte KG
(86) Internationale Anmeldenummer: PCT/EP2020/051945
(87) Internationale Veröffentlichungsnummer: WO 2020/157016

(56) Entgegenhaltungen:
- WO-A1-2018/080386
- DE-A1-102015 224 723
- FR-A1- 2 935 783
- FR-A1- 2 946 126

## Beschreibung

Die Erfindung betrifft eine Wärmeübertragungsvorrichtung gemäß dem Oberbegriff des Patentanspruches 1.

Aufgrund der Umweltbelastung durch fossile Brennstoffe nehmen Wärmepumpen in der Heiztechnik wie auch in der Prozesstechnik eine wichtige Stelle ein. Als Wärmequellen stehen Luft, Grundwasser, Erdreich etc. zur Verfügung. Die Leistungszahl von Wasser- Wärmepumpen wird innerhalb der Rahmenbedingungen durch den Leidenfrost-Effekt begrenzt. Üblicherweise ist die Funktionsweise von einer Wärmepumpe derart, dass sie aus einem relativ unbegrenzten Wärmevolumen, beispielsweise Grundwasser, nur in kleinen Temperaturschritten Wärme entnimmt, dies jedoch bei hohem Volumendurchsatz. Auf der Wärmeabgabeseite ist es ähnlich.

Aus der DE 10 2015 224723A1 ist eine Vorrichtung zur Wärmerückgewinnung aus Abwasser, die Verwendung der Vorrichtung und ein Verfahren zur Erwärmung von Frischwasser mittels der Vorrichtung bekannt.

Aus der WO 2018/080386 A1 und aus der FR 2 935 783 A1 sind Vorrichtungen zur Wärmerückgewinnung aus Abwasser bekannt, welche eine Wärmepumpe und einen Wärmetauscher aufweisen.

Weiters ist aus der FR 2 946 126 A1 ein Hybridheizsystem mit einer Erdwärmepumpe bekannt.

Nachteilig ist, dass bei vielen Prozessen Fluide mengenmäßig begrenzt und diskontinuierlich anfallen, aber mit relativ hohen Temperaturen. Mit herkömmlichen Wärmepumpenanordnungen kann oftmals nur ein kleiner Bruchteil der energetisch interessanten Wärmeenergie wiedergewonnen werden, beziehungsweise wäre eine bessere Wärmerückgewinnung mit einem hohen apparativen Mehraufwand verbunden.

Aufgabe der Erfindung ist es daher eine Wärmeübertragungsvorrichtung der eingangs genannten Art anzugeben, mit welcher die genannten Nachteile vermieden werden können, mit welcher auch bei mengenmäßig begrenzten und diskontinuierlich anfallenden Fluiden die Wärmeenergie energetisch effizient übertragen werden kann.

Erfindungsgemäß wird dies durch die Merkmale des Patentanspruches 1 erreicht.

Dadurch ergibt sich der Vorteil, dass auch bei mengenmäßig begrenzten und diskontinuierlich anfallenden Fluiden, wie beispielsweise warme Abwässer, die vorhandene Wärmeenergie effektiver übertragen werden kann, ohne dass erheblicher Mehraufwand benötigt wird. Hierbei wird das erste Fluid in den Speicherbehälter eingebracht, und aus dem Speicherbehälter so oft im Kreislauf durch die Wärmepumpe geleitet und in kleinen Schritten die Temperatur derart abgesenkt, bis eine weitere Temperaturübertragung in der Wärmepumpe energetisch wenig effizient oder problematisch wird. Ab diesen Moment wird das erste Fluid statt in den Speicherbehälter rückzufließen aus der Wärmeübertragungsvorrichtung ausgeschieden. Dadurch kann ein hoher Teil der nutzbaren Wärmeenergie in der Wärmepumpe von dem ersten Fluid auf das zweite Fluid übertragen werden. Die Wärmepumpe kann dabei bei entsprechend hohen Durchsätzen und energetisch günstigen Temperaturen betrieben werden. Weiters reicht für diese Verbesserung ein vom Volumen begrenzter Speicherbehälter aus, wodurch die Wärmeübertragungsvorrichtung kompakt ausgebildet werden kann.

Die Erfindung betrifft weiters ein Verfahren zum Übertragen von Wärme zwischen einem ersten Fluid und einem zweiten Fluid gemäß dem Patentanspruch 11.

Aufgabe der Erfindung ist es daher weiters ein Verfahren der eingangs genannten Art anzugeben, mit welcher die genannten Nachteile vermieden werden können, mit welcher auch bei mengenmäßig begrenzten und diskontinuierlich anfallenden Fluiden die Wärmeenergie energetisch effizient übertragen werden kann.

Erfindungsgemäß wird dies durch die Merkmale des Patentanspruches 11 erreicht.

Die Vorteile dieses Verfahrens entsprechen den Vorteilen der Wärmeübertragungsvorrichtung.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossene Zeichnung, in welcher lediglich eine bevorzugte Ausführungsform beispielhaft dargestellt ist, näher beschrieben.

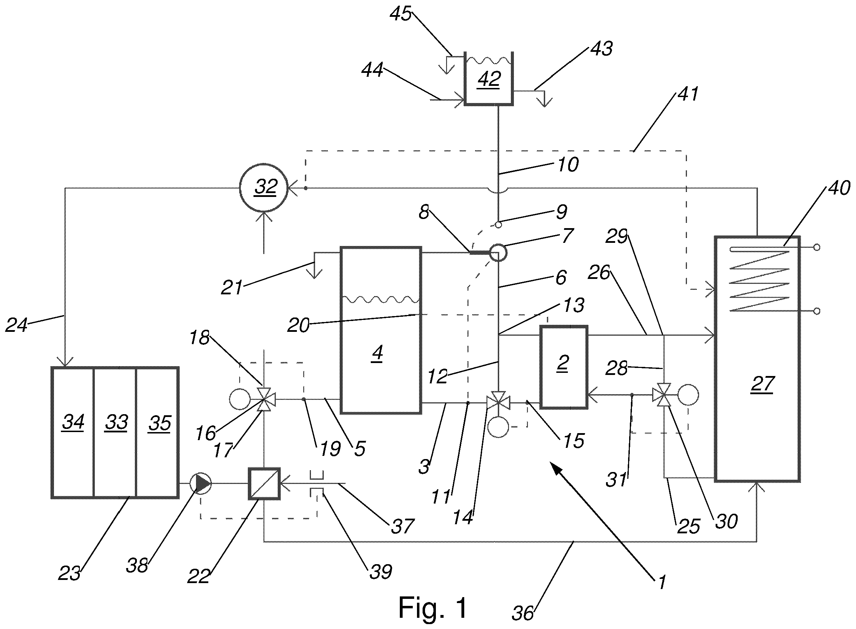

Dabei zeigt Fig. 1 eine bevorzugte Ausführungsform der Wärmeübertragungsvorrichtung als Teil eines Abwasserwärmerückgewinnungssystem als schematische Darstellung.

Die Fig. 1 zeigt eine bevorzugte Ausführungsform einer Wärmeübertragungsvorrichtung 1 umfassend eine Wärmepumpe 2 zum Übertragen von Wärme zwischen einem ersten Fluid und einem zweiten Fluid, wobei vorgesehen ist, dass eine Vorlaufleitung 3 der Wärmepumpe 2 für das erste Fluid mit einem Speicherbehälter 4 verbunden ist, dass der Speicherbehälter 4 mit einer Einlassleitung 5 für das erste Fluid verbunden ist, dass eine Rücklaufleitung 6 der Wärmepumpe 2 mit dem Speicherbehälters 4 verbunden ist, dass in der Rücklaufleitung 6 ein Umschaltventil 7 angeordnet ist, dass das Umschaltventil 7 in einer ersten Stellung 8 das von der Wärmepumpe 2 rücklaufende erste Fluid in den Speicherbehälter 4 rückspeist, dass das Umschaltventil 7 in einer zweiten Stellung 9 das von der Wärmepumpe 2 rücklaufende erste Fluid in eine Auslassleitung 10 umleitet, dass eine Steuereinrichtung mit zumindest einem Temperatursensor 11 zur Erfassung eines ersten Temperaturwertes des ersten Fluids an einer ersten Position der Wärmeübertragungsvorrichtung 1 das Umschaltventil 7 steuert, und dass mittels der Steuereinrichtung abhängig von dem ersten Temperaturwert das Umschaltventil 7 zwischen der ersten Stellung 8 und der zweiten Stellung 9 schaltet.

Weiters ist ein Verfahren zum Übertragen von Wärme zwischen dem ersten Fluid und dem zweiten Fluid mittels der Wärmeübertragungsvorrichtung 1, wobei das erste Fluid über die Einlassleitung 5 diskontinuierlich in den Speicherbehälter 4 eingebracht wird, wobei das ersten Fluid aus dem Speicherbehälter 4 zum Übertragen von Wärme zwischen dem ersten Fluid und dem zweiten Fluid durch die Wärmepumpe 2 geleitet wird, wobei der erste Temperaturwert des ersten Fluids an der ersten Position der Wärmeübertragungsvorrichtung 1 erfasst wird, wobei in Abhängigkeit von dem ersten Temperaturwert das erste Fluid nach der Wärmepumpe 2 wieder in den Speicherbehälter 4 rückgespeist wird oder aus der Wärmeübertragungsvorrichtung 1 abgeführt wird.

Dadurch ergibt sich der Vorteil, dass auch bei mengenmäßig begrenzten und diskontinuierlich anfallenden Fluiden, wie beispielsweise warme Abwässer, die vorhandene Wärmeenergie effektiver übertragen werden kann, ohne dass erheblicher Mehraufwand benötigt wird. Hierbei wird das erste Fluid in den Speicherbehälter 4 eingebracht, und aus dem Speicherbehälter 4 so oft im Kreislauf durch die Wärmepumpe 2 geleitet und in kleinen Schritten die Temperatur derart abgesenkt, bis eine weitere Temperaturübertragung in der Wärmepumpe 2 energetisch wenig effizient oder problematisch wird. Ab diesen Moment wird das erste Fluid statt in den Speicherbehälter 4 rückzufließen aus der Wärmeübertragungsvorrichtung 1 ausgeschieden. Dadurch kann ein hoher Teil der nutzbaren Wärmeenergie in der Wärmepumpe 2 von dem ersten Fluid auf das zweite Fluid übertragen werden. Die Wärmepumpe 2 kann dabei bei entsprechend hohen Durchsätzen und energetisch günstigen Temperaturen betrieben werden. Weiters reicht für diese Verbesserung ein vom Volumen begrenzter Speicherbehälter 4 aus, wodurch die Wärmeübertragungsvorrichtung 1 kompakt ausgebildet werden kann.

Die Wärmeübertragungsvorrichtung 1 ist eine Vorrichtung zum Übertragen von Wärme zwischen dem ersten Fluid und dem zweiten Fluid. Prinzipiell funktioniert eine Wärmepumpe 2 in beide Richtungen, so dass alternativ eine Übertragung von Wärme von dem zweiten Fluid auf das erste Fluid möglich wäre.

Insbesondere ist eine Übertragung von Wärme von dem ersten Fluid auf das zweite Fluid vorgesehen, da üblicherweise die Rückgewinnung von Wärme von einem mengenmäßig begrenzten Fluid interessanter ist. In diesem Falle wird insbesondere das erste Fluid durch die Verdampferseite der Wärmepumpe 2 geleitet. Das zweite Fluid kann durch die Kondensatorseite der Wärmepumpe 2 geleitet werden. Dadurch kann insbesondere die Abwärme von diskontinuierlich anfallenden Fluiden rückgewonnen werden.

Die Wärmepumpe 2 kann insbesondere eine für die jeweiligen Fluide geeignete Wärmepumpe 2 sein, beispielsweise eine Kompressionswärmepumpe oder eine Absorptionswärmepumpe. Die Wärmepumpe 2 weist insbesondere einen abgeschlossenen Betriebsmittelkreislauf auf, über welchen die Wärmeübertragung zwischen den beiden Seiten der Wärmepumpe 2 erfolgt.

Besonders bevorzugt kann vorgesehen sein, dass das erste Fluid und/oder das zweite Fluid Flüssigkeiten sind. Wärmepumpen 2 für Flüssigkeiten weisen üblicherweise eine hohe Leistungszahl auf. Das erste Fluid und/oder das zweite Fluid können insbesondere zumindest vorwiegend Wasser sein. Bei einer Wärmepumpen 2 für Wasser kann insbesondere eine hohe Leistungszahl bei Temperaturen zwischen 20°C und 25°C erreicht werden.

Die Wärmeübertragungsvorrichtung 1 weist eine Einlassleitung 5 auf, über welche das erste Fluid in den Speicherbehälter 4 eingebracht wird. Der Speicherbehälter 4 ist zum temporären Speichern des ersten Fluids vorgesehen.

Der Speicherbehälter 4 kann insbesondere drucklos ausgebildet sein. Dies kann besonders bevorzugt dadurch erfolgen, dass der Speicherbehälter 4 offen ist oder eine Druckausgleichvorrichtung hat. Dadurch kann ungehindert erstes Fluid durch die Einlassleitung 5 in den Speicherbehälter 4 eingespeist werden.

Der Speicherbehälter 4 kann insbesondere ein Fassungsvermögen bis 3.000l, insbesondere bis 1.000l, besonders bevorzugt bis 300l, aufweisen. Dadurch kann der Speicherbehälter 4 klein dimensioniert sein, da dieser das erste Fluid lediglich zu speichern braucht, bis die zu übertragende Wärmemenge durch die Wärmepumpe 2 übertragen wurde.

Die Wärmepumpe 2 ist über eine Vorlaufleitung 3 für das erste Fluid mit dem Speicherbehälter 4 verbunden, so dass das erste Fluid aus dem Speicherbehälter 4 in die Wärmepumpe 2 geleitet werden kann.

Zur Bewegung des ersten Fluids und des zweiten Fluids können insbesondere die entsprechenden Pumpen in der Wärmeübertragungsvorrichtung 1 angeordnet sein, welche in der Fig. 1 nicht gesondert dargestellt sind.

Nach der Wärmepumpe 2 wird das erste Fluid in eine Rücklaufleitung 6 geleitet. Die Rücklaufleitung 6 ist durch ein, in der Rücklaufleitung 6 angeordnetes Umschaltventil 7 zweigeteilt, wobei ein erster Teil der Rücklaufleitung 6 die Wärmepumpe 2 mit einem Eingang des Umschaltventils 7 verbindet, und ein zweiter Teil der Rücklaufleitung 6 einen ersten Ausgang des Umschaltventils 7 mit dem Speicherbehälter 4.

Das Umschaltventil weist zumindest zwei Stellungen auf, wobei in der ersten Stellung das rücklaufende erste Fluid durch den ersten Ausgang des Umschaltventils 7 in den Speicherbehälter 4 zurückfließt.

In der ersten Stellung wird daher das erste Fluid aus dem Speicherbehälter 4 durch die Wärmepumpe 2 im Kreis geführt, wodurch Wärmeenergie schrittweise zwischen dem ersten Fluid und dem zweiten Fluid übertragen wird. Insbesondere wird schrittweise Wärmeenergie von dem ersten Fluid auf das zweite Fluid übertragen, wobei das erste Fluid bei einem Durchgang durch die Wärmepumpe um eine Temperaturdifferenz abgekühlt wird. Diese Temperaturdifferenz des ersten Fluids bei dem Durchgang durch die Wärmepumpe kann insbesondere wenige °C, insbesondere einen Wert zwischen 3°C und 7°C, betragen. Dadurch kann energetisch sehr effektiv Wärmeenergie zwischen dem ersten Fluid und dem zweiten Fluid übertragen werden, da über die Wärmepumpe 2 kontinuierlich nur ein geringer Teil der Wärmeenergie übertragen wird. In der Fig. 1 wird das Umschaltventil 7 in der ersten Stellung 8 dargestellt.

Da von einem endlichen Reservoir an erstem Fluid in dem Speicherbehälter 4 die Wärme übertragen wird, ändert sich die Temperatur des ersten Fluids in dem Speicherbehälter 4 durch die Wärmeübertragung in der Wärmepumpe 2, wenn kein erstes Fluid nachfließt, wodurch der Betrieb der Wärmepumpe 2 energetisch weniger effizient wird.

Das Umschaltventil 7 weist daher einen zweiten Ausgang auf, welcher mit einer Auslassleitung 10 verbunden ist, wobei das Umschaltventil 7 in der zweiten Stellung 9 das rücklaufende erste Fluid in die Auslassleitung 10 umleitet, statt es in den Speicherbehälter 4 rückzuführen. Durch die Auslassleitung 10 wird das erste Fluid aus der Wärmeübertragungsvorrichtung 1 ausgeschieden. In der zweiten Stellung des Umschaltventils 7 wird daher der Speicherbehälter 4 geleert, da das erste Fluid nicht mehr in den Speicherbehälter 4 zurückgespeist wird.

Das Umschaltventil 7 könnte auch mehr als zwei Stellungen aufweisen. Beispielsweise könnte in einer weiteren Stellung das rückgeführte Fluid nur zum Teil in die Auslassleitung 10 umgeleitet werden. Weiters könnte in einer weiteren Stellung das rückgeführte Fluid in eine weitere Auslassleitung geführt werden, welche zu einem anderen Ausgang der Wärmeübertragungsvorrichtung 1 führt.

Um zwischen der ersten Stellung 8 und der zweiten Stellung 9 zu wechseln wird das Umschaltventil 7 von einer Steuereinrichtung gesteuert. Die Steuereinrichtung ist in Fig. 1 nicht abgebildet, sondern stattdessen die Zusammenhänge zwischen Sensoren und steuerbaren Einrichtungen durch strichlinierte Linien angedeutet.

Die Steuereinrichtung weist zumindest einen Temperatursensor 11 zur Erfassung des ersten Temperaturwertes des ersten Fluids an der ersten Position der Wärmeübertragungsvorrichtung 1 auf, wobei die Steuereinrichtung abhängig von dem ersten Temperaturwert das Umschaltventil 7 zwischen der ersten Stellung 8 und der zweiten Stellung 9 schaltet. Der erste Temperaturwert ist die gemessene Temperatur des ersten Fluids an der ersten Position der Wärmeübertragungsvorrichtung 1. Sofern mehr als ein Temperatursensor vorhanden ist kann der zumindest eine Temperatursensor 11 auch als erster Temperatursensor 11 bezeichnet werden. Dass die Steuereinrichtung abhängig von dem ersten Temperaturwert das Umschaltventil 7 zwischen der ersten Stellung 8 und der zweiten Stellung 9 schaltet bedeutet, dass die Steuereinrichtung so geschaltet und/oder programmiert ist, dass der erste Temperaturwert zumindest für die Prüfung einer ersten Bedingung, ob das Umschaltventil 7 zwischen der ersten Stellung 8 und der zweiten Stellung 9 geschaltet werden soll, herangezogen wird. Anhand des ersten Temperaturwertes kann festgestellt werden, ob eine Rückspeisung des ersten Fluids in den Speicherbehälter 4 weiter erfolgen soll, oder das erste Fluid abgelassen werden kann.

Für diese Prüfung der ersten Bedingung können insbesondere noch weitere Sensorwerte, bevorzugt ein Füllstand des Speicherbehälters 4, eine Temperatur des zweiten Fluids, ein Druck, die Umgebungstemperatur oder andere Sensorwerte herangezogen werden.

Neben der ersten Bedingung kann die Steuereinrichtung zum Umschalten des Umschaltventils 7 zwischen der ersten Stellung 8 und der zweiten Stellung 9 auch weitere Bedingungen aufweisen. Diese weiteren Bedingungen können beispielsweise beinhalten, dass aus hygienischen Gründen der Speicherbehälter 4 unabhängig von der Temperatur des ersten Fluids zu leeren ist.

Bevorzugt kann unabhängig davon, ob das Umschaltventil 7 in der ersten Stellung 8 oder in der zweiten Stellung 9 ist, neues erstes Fluid durch die Einlassleitung 5 in den Speicherbehälter 4 eingebracht werden. Es kann daher unabhängig davon, ob das erste Fluid rückgespeist oder abgelassen wird neues erstes Fluid durch die Einlassleitung 5 in den Speicherbehälter 4 eingebracht werden, wodurch das erste Fluid eingebracht werden kann, wenn es anfällt.

Besonders bevorzugt ist vorgesehen, dass die Steuereinrichtung so ausgebildet ist, dass, dass das erste Fluid mit 1 bis 5°C über einem Gefrierpunkt des ersten Fluids ausgeschieden wird. Dies kann durch Abstimmung der Position des zumindest einen Temperatursensor 11 sowie die Abhängigkeit des Umschaltvorgangs von der ersten Temperatur eingestellt werden. Dadurch kann ein Einfrieren der Leitungen verhindert werden, wobei die nutzbare Wärmeenergie weitgehend übertragen wurde.

Insbesondere kann vorgesehen sein, dass die Steuereinrichtung eine erwartete Temperaturdifferenz des ersten Fluids bei dem Durchgang durch die Wärmepumpe 2 vorgegeben ist, und das erste Fluid ausgeschieden wird, wenn eine erwartete Temperatur des ersten Fluids bei dem Umschaltventil 7 kleiner als der Gefrierpunkt des ersten Fluids plus die erwartete Temperaturdifferenz des ersten Fluids bei dem Durchgang durch die Wärmepumpe 2 ist. Dieser Temperatur kann bevorzugt eine weitere Sicherheit von 1 bis 3°C addiert werden. Die erwartete Temperaturdifferenz des ersten Fluids bei dem Durchgang durch die Wärmepumpe 2 kann insbesondere ein Wert zwischen 3°C und 7°C sein. Die erwartete Temperaturdifferenz des ersten Fluids bei dem Durchgang durch die Wärmepumpe 2 kann entweder vorgegeben sein, anhand von Erfahrungswerten bestimmt werden oder aus den Randbedingungen beim Betrieb der Wärmepumpe 2 bestimmt werden. Durch diese Steuerung kann die vorhandene Wärmeenergie bestmöglich ausgeschöpft werden, da eine Rückspeisung des ersten Fluids mit einer Temperatur kleiner als der Gefrierpunkt des ersten Fluids plus die erwartete Temperaturdifferenz des ersten Fluids bei dem Durchgang durch die Wärmepumpe 2 zu einer Vereisung der Rücklaufleitung 6 führen könnte.

Insbesondere kann vorgesehen sein, dass in der Steuereinrichtung ein vorgebbarer erster Grenzwert gespeichert ist, dass die Steuereinrichtung das Umschaltventils 7 in die erste Stellung 8 schaltet, wenn der erste Temperaturwert größer ist als der erste Grenzwert und in die zweite Stellung 9 schaltet, wenn der erste Temperaturwert kleiner ist als der erste Grenzwert. Hierbei kann vorgesehen sein, dass das erste Fluid nach der Wärmepumpe 2 in den Speicherbehälter 4 rückgespeist wird, wenn der erste Temperaturwert größer als der erste Grenzwert ist, und dass das erste Fluid nach der Wärmepumpe 2 aus der Wärmeübertragungsvorrichtung 1 abgeführt wird, wenn der erste Temperaturwert kleiner als der erster Grenzwert ist. Mit dem ersten Grenzwert kann eine besonders einfache Steuereinrichtung realisiert werden, welche mit besonders wenig Sensorik auskommt.

Alternativ könnte statt einem ersten Grenzwert für den ersten Temperaturwert eine Temperaturdifferenz zwischen dem ersten Temperaturwert und einem Temperaturwert des zweiten Fluids herangezogen werden.

Bevorzugt kann vorgesehen sein, dass der Temperatursensor 11 zur Erfassung des ersten Temperaturwertes an der Vorlaufleitung 3 der Wärmepumpe 2 angeordnet ist. Sofern die erwartete Temperaturdifferenz des ersten Fluids bei dem Durchgang durch die Wärmepumpe 2 absehbar ist, kann dadurch die Temperatur des ersten Fluids beim Verlassen der Wärmepumpe 2 gut abgeschätzt werden.

Alternativ kann vorgesehen sein, dass der Temperatursensor 11 zur Erfassung des ersten Temperaturwertes an der Rücklaufleitung 6 der Wärmepumpe 2 vor dem Umschaltventil 7 oder in dem Speicherbehälter 4 angeordnet ist.

Bevorzugt kann vorgesehen sein, dass der erste Grenzwert zwischen 4°C und 7°C beträgt. Dieser Grenzwert kann insbesondere für einen Temperatursensor 11 in der Vorlaufleitung 3 vorgesehen sein. Dadurch kann insbesondere bei Wasser als erstes Fluid ein Einfrieren der Leitungen verhindert wird, wobei die nutzbare Wärmeenergie weitgehend übertragen wurde.

Besonders bevorzugt kann vorgesehen sein, dass eine Kreislaufleitung 12 die Rücklaufleitung 6 mit der Vorlaufleitung 3 verbindet, wobei ein Stellventil 14 in Abhängigkeit eines zweiten Temperaturwertes des ersten Fluids einen Durchfluss in der Kreislaufleitung 12 steuert, wobei insbesondere ein zweiter Temperatursensors 15 zur Bestimmung des zweiten Temperaturwertes an der Vorlaufleitung 3 vor der Wärmepumpe 2 angeordnet ist. Insbesondere kann in Abhängigkeit des zweiten Temperaturwertes des ersten Fluids vor der Wärmepumpe 2, insbesondere wenn der zweite Temperaturwert einen zweiten Grenzwert überschreitet, zumindest ein Teil des ersten Fluids nach der Wärmepumpe 2 wieder unmittelbar der Wärmepumpe 2 zugeführt wird. Dadurch kann dem Problem entgegengewirkt werden, dass bei einer zu hohen Temperatur des ersten Fluids in dem Speicherbehälter 4 die Leistungszahl der Wärmepumpe 2 stark verringert wird. Insbesondere bei einer hohen Temperatur kann ein Teil des ersten Fluids nach der Wärmepumpe 2 wieder, gemischt mit ersten Fluid aus dem Speicherbehälter 4 der Wärmepumpe 2 zugeführt werden, wodurch die Wärmepumpe 2 in einem Temperaturbereich mit hoher Leistungszahl betrieben werden kann. Durch das Stellventil 14 kann ein Mischverhältnis zwischen erstem Fluid aus dem Speichertank 4 und aus der Wärmepumpe 2 zurückkehrendes ersten Fluid eingestellt werden, mit welchem eine Eingangstemperatur des ersten Fluids in die Wärmepumpe eingestellt werden kann, insbesondere unter einem zweiten Grenzwert gehalten werden kann.

Bevorzugt kann vorgesehen sein, dass das Stellventil 14 als ein Dreiwegemischer in der Vorlaufleitung 3 ausgebildet ist. Hierbei kann die Kreislaufleitung 12 eine Abzweigung 13 in der Rücklaufleitung 6 mit dem Stellventil 14 in der Vorlaufleitung 3 verbinden. Dies ist beispielhaft in Fig. 1 dargestellt.

Alternativ kann die Kreislaufleitung 12 das Stellventil 14 in der Rücklaufleitung 6 mit einer Abzweigung 13 in der Vorlaufleitung 3 verbinden.

Der zweite Grenzwert kann insbesondere zwischen 22°C und 27°C betragen.

Das Stellventil 14 kann insbesondere über die Steuereinrichtung gesteuert werden, wobei die Steuereinrichtung das Mischverhältnis des Stellventils 14 einstellt.

Auf Seiten des zweiten Fluids kann die Wärmepumpe 2 insbesondere eine zweite Vorlaufleitung 25 sowie eine zweite Rücklaufleitung 26 für das zweite Fluid aufweisen.

Insbesondere kann das zweite Fluid in einem zweiten Speicherbehälter 27 gespeichert sein, welcher über die zweite Vorlaufleitung 25 sowie die zweite Rücklaufleitung 26 mit der Wärmepumpe 2 verbunden sind. Dadurch kann besonders unmittelbar die Wärme zwischen dem ersten Fluid und dem zweiten Fluid übertragen werden.

Alternativ kann vorgesehen sein, dass das zweite Fluid in einem Zwischenkreislauf zwischen der Wärmepumpe 2 und einem Wärmeübertrager in dem zweiten Speicherbehälter 27 zirkuliert, wobei der zweite Speicherbehälter 27 zur Aufnahme eines dritten Fluides vorgesehen ist. Dadurch kann ein Eindringen von Betriebsmittel aus der Wärmepumpe in das dritte Fluid verhindert werden.

Besonders bevorzugt kann vorgesehen sein, dass eine zweite Kreislaufleitung 28 die zweiten Rücklaufleitung 26 für das zweite Fluid mit der zweite Vorlaufleitung 25 verbindet, wobei ein zweites Stellventil 30 in Abhängigkeit eines zweiten Temperaturwertes des zweiten Fluids einen Durchfluss in der zweite Kreislaufleitung 28 steuert, wobei insbesondere ein Temperatursensors 31 zur Bestimmung des zweiten Temperaturwertes des zweiten Fluids an der zweiten Vorlaufleitung 25 vor der Wärmepumpe 2 angeordnet ist. Insbesondere kann vorgesehen sein, dass eine zweite Kreislaufleitung 28 eine zweite Abzweigung 29 in der zweiten Rücklaufleitung 26 für das zweite Fluid mit dem zweiten Stellventil 30 in der zweite Vorlaufleitung 25 verbindet. Die Funktionsweise des zweiten Stellventils 30 ist ähnlich wie die Funktionsweise des ersten Stellventils 14. Insbesondere kann dadurch die Eingangstemperatur des zweiten Fluids in die Wärmepumpe 2 eingestellt werden, wobei die Eingangstemperaturen des ersten Fluids und des zweiten Fluids so eingestellt werden können, dass die Wärmepumpe 2 bei einer großen Leistungszahl betrieben werden kann.

Bevorzugt kann vorgesehen sein, dass in der Einlassleitung 5 ein Einlass-Mischer 16 mit einem ersten Eingang 17 für einen ersten Teil des erstes Fluid mit variabler Temperatur und einem zweiten Eingang 18 für einen zweiten Teil des erstes Fluid mit einer im Wesentlichen konstanten und kühleren Temperatur als der zweite Teil aufweist, wobei der Einlass-Mischer 16 in Abhängigkeit eines dritten Temperaturwertes des ersten Fluids gesteuert wird, wobei insbesondere ein dritter Temperatursensor 19 zur Bestimmung des dritten Temperaturwertes an der Einlassleitung 5 zwischen dem Einlass-Mischer 16 und dem Speicherbehälter 4 angeordnet ist. Hierbei kann vorgesehen sein, dass in Abhängigkeit des dritten Temperaturwertes des ersten Fluids in der Einlassleitung 5 vor dem Speicherbehälter 4, insbesondere wenn der dritte Temperaturwert einen dritten Grenzwert überschreitet, in der Einlassleitung 5 ein erster Teil des ersten Fluids mit variablen Temperatur ein zweiter Teil des ersten Fluids mit im Wesentlichen konstanter und kühleren Temperatur als der erste Teil beigemischt wird. Dies hat, wie auch die Kreislaufleitung 12 mit dem Kreislaufmischer, die Wirkung, dass ein erstes Fluid mit zu hoher Temperatur vermieden werden kann. Hierbei ist der erste Teil des erstes Fluid mit variabler Temperatur jener Teil, dessen Wärmeenergie primär wiedergewonnen werden soll. Der erste Teil des erstes Fluid kann insbesondere ein warmes und gereinigtes Abwasser sein, welches diskontinuierlich anfällt. Durch die gezielt Zumischung des zweiten Teils des ersten Fluids kann die Gesamttemperatur des in den Speicherbehälter 4 einfließenden Fluids abgesenkt werden. Der zweite Teil des ersten Fluids kann beispielsweise ein Frischwasser oder ein bereits abgekühltes gereinigtes Abwasser sein. Die Anordnung mit dem Einlass-Mischer 16 kann zusätzlich oder alternativ zu der Anordnung mit dem Stellventil 14 vorgesehen sein. Der dritte Grenzwert kann insbesondere ein Wert zwischen 22°C und 27°C betragen.

Bevorzugt kann vorgesehen sein, dass in dem Speicherbehälter 4 ein Füllstandmesser 20 angeordnet ist, und dass sich insbesondere bei einem Unterschreiten eines vorgegebenen Grenzfüllstandes die Wärmepumpe 2 abschaltet. Der Füllstandmesser 20 kann dazu verwendet werden, ein Ablassen des ersten Fluids aus der Auslassleitung 10 zu verhindern, sofern der Füllstand in dem Speicherbehälter 4 unter einen vorgegebenen Grenzfüllstand fällt. Der vorgegebenen Grenzfüllstand kann vorzugsweise ein Wert von 10% bis 50% des Maximalfüllstandes des Speicherbehälters 4 sein, wodurch das in dem Speicherbehälter 4 verbleibende erste Fluid ein neu eingelassenen erstes Fluid durch Mischung abkühlt. Der Füllstandmesser 20 kann auch verwendet werden um bei einem Überschreiten eines zweiten Grenzfüllstandes das Umschaltventil in die zweite Stellung 9 zu schalten, um ein Überlaufen des Speicherbehälters 4 zu verhindern.

Weiters kann vorgesehen sein, dass der Speicherbehälter 4 einen Überlauf 21 aufweist. Sofern mehr diskontinuierlich anfallendes erstes Fluid anfällt als der Speicherbehälter 4 fassen kann, kann dadurch überzähliges erstes Fluid abgelassen werden. Dieses abgelassen erste Fluid kann für weitere Zwecke außerhalb der Wärmeübertragungsvorrichtung 1 verwendet werden.

Bevorzugt kann vorgesehen sein, dass in der Einlassleitung 5 ein Wärmeübertrager 22 zwischen dem ersten Fluid und einem weiteren Fluid, insbesondere dem zweiten Fluid, angeordnet ist. Dadurch kann auf besonders einfache Weise bereits ohne Wärmepumpe ein Teil an Wärmeenergie zwischen dem ersten Fluid und dem weiteren Fluid übertragen werden. Der Wärmeübertrager 22 kann in Flussrichtung insbesondere vor dem Einlass-Mischer 16 angeordnet sein, besonders bevorzugt vor dem ersten Eingang 17 des Einlass-Mischers 16.

Besonders bevorzugt kann ein Abwasserwärmerückgewinnungssystem umfassend eine Reinigungsanlage 23 und die Wärmeübertragungsvorrichtung 1 vorgesehen sein, wobei die Reinigungsanlage 23 ausgebildet ist Abwasser aus einer Abwasserleitung 24 zu reinigen, wobei ein Ausgang der Reinigungsanlage 23 mit der Einlassleitung 5 der Wärmeübertragungsvorrichtung 1 verbunden ist, wobei das gereinigte Abwasser zumindest einen Teil des ersten Fluids darstellt, wobei die Wärmeübertragungsvorrichtung 1 ausgebildet ist Wärmeenergie von dem gereinigten Abwasser auf ein Frischwasser zu übertragen. Weiters kann ein Verfahren zur Wärmerückgewinnung aus Abwasser vorgesehen sein, wobei das Abwasser in der Reinigungsanlage 23 gereinigt wird, wobei das in der Reinigungsanlage gereinigte Abwasser der Wärmeübertragungsvorrichtung 1 zugeführt wird, wobei in der Wärmeübertragungsvorrichtung 1 Wärmeenergie von dem gereinigten Abwasser zumindest als Teil des ersten Fluids an ein Frischwasser übertragen wird. Gerade bei Wasser fallen diskontinuierlich Mengen mit energetisch interessanten Temperaturen an, deren Nutzung zum Aufheizen von Frischwasser ökologisch sehr sinnvoll ist.

Besonders bevorzugt kann vorgesehen sein, dass das Frischwasser das dritte Fluid ist, so dass der Kreislauf mit dem zweiten Fluid die Wärmepumpe 2 von dem Frischwasser trennt. Dadurch kann bei einem etwaigen Leck der Wärmepumpe kein Betriebsmittel, beispielsweise Kältemittel, aus der Wärmepumpe 2 in das Frischwasser gelangen. Das zweite Fluid kann insbesondere in dem zweiten Speicherbehälter 27 einen Wärmeübertrager aufweisen.

Alternativ kann vorgesehen sein, dass das Frischwasser als zweites Fluid verwendet wird, welches die Wärmepumpe 2 durchströmt.

Ein Abwasserwärmerückgewinnungssystem ist ein System zur Rückgewinnung von Wärmeenergie aus einem Abwasser. Das Abwasser kann insbesondere ein Grauwasser sein. Grauwasser ist eine Bezeichnung von fäkalienfreien Abwässern, insbesondere aus Badewannen, Duschen, Waschmaschinen, Geschirrspülern und dergleichen. Derartige Einrichtungen und Maschinen können als Abwassererzeuger 32 bezeichnet werden. In Fig. 1 ist symbolisch lediglich ein Abwassererzeuger 32 eingezeichnet, wobei tatsächlich eine Vielzahl an Abwassererzeuger 32 in einem Gebäude vorgesehen sein können. Das Abwasser der unterschiedlichen Abwassererzeuger 32 kann dann in einer, insbesondere dem Gebäude zugehörenden, Abwasserleitung 24 gesammelt und dem Abwasserwärmerückgewinnungssystem zugeführt werden. Übliche Verschmutzungen von Grauwasser sind Hautschuppen, Haare, Seifenreste, Fette, Speisereste und dergleichen. Die Temperatur des Grauwassers wird beim Duschen oder Baden in der Regel von dem Verbraucher mittels einer Armatur des Abwassererzeugers 32 eingestellt.

Im Gegensatz zum Grauwasser werden fäkalienbelastete Abwässer aus Toiletten als Schwarzwasser bezeichnet.

Das Abwasser der Abwasserleitung 24 wird der Reinigungsanlage 23 des Abwasserwärmerückgewinnungssystems zugeführt, wobei das Abwasser in der Reinigungsanlage 23 gereinigt wird. Das gereinigte Abwasser kann auch als Filtrat bezeichnet werden.

Nach der Reinigungsanlage 23 wird das gereinigte Abwasser durch die Wärmeübertragungsvorrichtung 1 geleitet, wobei das Abwasser in der Wärmeübertragungsvorrichtung 1 einen Teil seiner Wärmeenergie an ein Frischwasser, insbesondere Kaltwasser, überträgt. Als Frischwasser wird hierbei ein noch unverschmutztes Wasser bezeichnet, welches als Kaltwasser oder Warmwasser vorliegen kann.

Insbesondere kann vorgesehen sein, dass die Reinigungsanlage 23 einen Belebungsbehälter 33 mit Mikroorganismen aufweist, wobei die Mikroorganismen organische Bestandteile des Abwassers zersetzen und, dass in dem Belebungsbehälter 33 eine Filtermembran angeordnet ist. Der Belebungsbehälter 33 ist ein, insbesondere nach oben hin offener, Behälter der Reinigungsanlage 23, in welchem Mikroorganismen vorhanden sind, welche Verschmutzungen des Abwassers in Form organischer Bestandteile biologisch zersetzen. Insbesondere können die Mikroorganismen gezielt in den Belebungsbehälter 33 eingebracht werden, da Grauwasser im Vergleich zu Schwarzwasser wenige Mikroorganismen in sich trägt.

In dem Belebungsbehälter 33 ist bevorzugt eine Filtermembran angeordnet, welche vom dem Abwasser durchströmt wird. Die Filtermembran kann insbesondere in den Belebungsbehälter 33 eingetaucht sein. Bei dem Durchströmen der Filtermembran werden die anorganischen und organischen Bestandteile des Abwassers, welche größer als die Poren der Filtermembran sind, mechanisch zurückgehalten. Diese ausgefilterten Bestandteile fällen aus oder bleiben an der Oberfläche der Filtermembran haften, wo diese dann durch die Mikroorganismen zersetzt werden. Durch die Mikroorganismen wird daher die Filtermembran laufend gereinigt, wodurch diese auch bei vergleichsweise kleiner Porengröße nicht verstopft. Das Abwasser kann daher gründlicher gereinigt werden als bei herkömmlichen Filtermethoden, wodurch das Abwasser durch eine Wärmeübertragungsvorrichtung 1 mit hohem Wirkungsgrad geführt werden kann, ohne diesen zu verstopfen. Durch die ständige Reinigung der Filtermembran durch die Mikroorganismen ist eine zusätzliche externe Reinigung im Rahmen einer Wartung nur selten notwendig, beispielsweise jährlich. Dadurch ergibt sich der Vorteil, dass das Abwasserwärmerückgewinnungssystem bei kompakten Abmessungen und hohem Durchsatz einen hohen Wirkungsgrad erreichen kann, wobei dennoch der Aufwand an Wartung sehr niedrig ist. Durch den niedrigen Aufwand an Wartung ist das Abwasserwärmerückgewinnungssystem besonders gut für Wohnbauten geeignet, und nicht nur bei Großanlagen wirtschaftlich. Durch die Filtermembran 7 kann das Abwasser derart gut gereinigt werden, dass dieses durch eine Wärmeübertragungsvorrichtung 1 mit hohem Wirkungsgrad geführt werden kann, welche üblicherweise sehr anfällig gegenüber Verschmutzungen ist. Durch den Belebungsbehälter 33 erfolgt eine andauernde biologische Reinigung des Abwassers, wodurch die Reinigungsanlage mit sehr wenig Wartung betrieben werden kann. Dadurch kann auf wirtschaftliche Weise der Energieverbrauch für die Bereitstellung von Warmwasser in Gebäuden gesenkt werden.

Besonders bevorzugt kann vorgesehen sein, dass eine Porengröße der Filtermembran mindestens 0,1 µm, insbesondere mindestens 0,2 µm, besonders bevorzugt mindestens 0,4 µm, beträgt. Die Porengröße kann insbesondere die nominale Porengröße sein, welche das Maximum der Porengrößenverteilung angibt. Bei einer Porengröße von mindestens 0,1 µm kann auch von einem Mikrofilter gesprochen werden. Bei einer derartigen Porengröße werden Bakterien, Pilze und dergleichen von der Filtermembran zurückgehalten. Da es die primäre Aufgabe der Filtermembran ist die Wärmeübertragungsvorrichtung 1 vor einem Verstopfen zu schützen, welches insbesondere durch das Anwachsen von Biofilmen aus Bakterien verursacht wird, ist eine derartige Porengröße für die Aufgabe ausreichend klein, während diese weiterhin einen guten Durchlass, welcher stark von der Porengröße abhängt, gewährleistet. Viren, welche üblicherweise bei Membranbelebungsreaktoren mittels Ultrafiltration, also Porengrößen kleiner 0,1 µm, ausgefiltert werden, sind im gegenständlichen Fall von geringerer Bedeutung.

Insbesondere kann vorgesehen sein, dass durch die Filtermembran Teilchen mit einem Durchmesser von mindestens 0,1 µm, insbesondere mindestens 0,2 µm, besonders bevorzugt mindestens 0,4 µm, zurückgehalten werden.

Weiters kann vorgesehen sein, dass die Porengröße der Filtermembran maximal 10 µm, insbesondere maximal 3 µm, besonders bevorzugt maximal 1 µm, beträgt.

Bevorzugt kann weiters ein Gebäude, insbesondere ein Wohngebäude, mit dem Abwasserwärmerückgewinnungssystem vorgesehen sein.

Das Gebäude kann insbesondere ein Wohngebäude für mindestens zwanzig Einwohner, insbesondere mindestens fünfzig Einwohner, sein. Hierbei hat sich gezeigt, dass das Abwasserwärmerückgewinnungssystem insbesondere ab zwanzig Einwohner wirtschaftlich ist. Die Dimensionierung des Abwasserwärmerückgewinnungssystem, insbesondere bezüglich Fassungsvermögen und/oder Durchsatz des Belebtbehälters 33, kann dabei abhängig von der vorgesehenen Anzahl der Einwohner des Gebäudes sein.

Weiters kann vorgesehen sein, dass die Reinigungsanlage 23 eine, dem Belebungsbehälter 33 vorgelagerte Vorklärstufe 34 mit einem Sieb aufweist. In der Vorklärstufe 34 können größere und nicht zersetzbare Verunreinigungen des Abwassers bereits ausgefällt oder ausgesiebt werden. Insbesondere kann vorgesehen sein, dass die Vorklärstufe 34 einen Eingang aufweist, welcher vorgesehen ist mit der Abwasserleitung 24 verbunden zu werden. Dadurch kann die Durchgangsleistung und der Wartungsbedarf der Reinigungsanlage 23 weiter reduziert werden. Weiters kann vorgesehen sein, dass das Abwasser aus der Abwasserleitung 24 in die Vorklärstufe 34 gelangt und in der Vorklärstufe 34 durch den Sieb zu einem Ausgang der Vorklärstufe 34 geführt wird. Der Ausgang der Vorklärstufe 34 kann insbesondere mittels einer Zwischenleitung mit einem Eingang des Belebungsbehälters 33 verbunden sein.

Weiters kann vorgesehen sein, dass die Reinigungsanlage 23 einen, dem Belebungsbehälter 33 nachgelagerten Filtratspeicherbehälter 35 mit einer Desinfektionseinrichtung, insbesondere einer UV-Lampe, aufweist. Der Filtratspeicherbehälter 35 ist bevorzugt leitungstechnisch zwischen dem Belebungsbehälter 33 und der Wärmeübertragungsvorrichtung 1 angeordnet. Der Filtratspeicherbehälter 35 ist dazu vorgesehen das gereinigte Abwasser aus dem Belebungsbehälter 33 bis zur Verwendung bei der Wärmeübertragungsvorrichtung 1 zu speichern. Damit sich etwaige Mikroorganismen nicht im gereinigten Abwasser vermehren ist eine Desinfektionseinrichtung vorgesehen, welche durch die Filtermembran gelangte Mikroorganismen abtötet. Die Desinfektionseinrichtung kann besonders einfach als UV-Lampe ausgebildet sein.

Bevorzugt kann vorgesehen sein, dass der Überlauf 21 des Speicherbehälters 4 in den Filtratspeicherbehälter 35 führt. Dadurch kann ein Verlust vom warmen und gereinigten Abwasser vermieden werden.

Insbesondere kann vorgesehen sein, dass der Belebungsbehälter 33 und/oder die Vorklärstufe 34 belüftet sind. Durch die Belüftung wird der biologische Abbauprozess in dem Belebungsbehälter 33 und/oder der Vorklärstufe 34 beschleunigt.

Besonders bevorzugt kann vorgesehen sein, dass die Wärmeübertragungsvorrichtung 1 einen Wärmeübertrager 22 mit einer Frischwasserleitung 36 aufweist. Insbesondere kann die Einlassleitung der Wärmeübertragungsvorrichtung 1 und die Frischwasserleitung 36 durch den Wärmeübertrager 22 führen.

Besonders bevorzugt kann vorgesehen sein, dass der Wärmeübertrager 22 einen Wirkungsgrad von mindestens 80%, insbesondere mindestens 90%, besonders bevorzugt mindestens 95%, aufweist. Ein derart hoher Wirkungsgrad kann durch eine sehr große Wärmeübertragungsfläche im Vergleich zu dem Gesamtvolumen des Wärmeübertragers 22 erreicht werden.

Weiters kann vorgesehen sein, dass der Wärmeübertrager 22 als Gegenstromwärmeübertrager ausgebildet ist.

Besonders bevorzugt kann vorgesehen sein, dass der Wärmeübertrager 22 ein Plattenwärmeübertrager ist. Bei einem Plattenwärmeübertrager werden durch mehrere, insbesondere profilierte, Platten mehrere Räume voneinander abgegrenzt, welche alternierend vom ersten Fluid und vom weiteren Fluid durchströmt werden. Plattenwärmeübertrager haben den Vorteil eines einfachen Aufbaus und hoher Wirkungsgrade, allerdings sind diese aufgrund der großen Wärmeübertagungsflächen und den geringen Abstand der Platten zueinander anfällig gegenüber Verschmutzungen. Diese Verschmutzungen können aber durch die Filtermembran zuverlässig ferngehalten werden.

Weiters kann vorgesehen sein, dass der Wärmeübertrager 22 ein Spiralwärmeübertrager ist. Bei einem Spiralwärmeübertrager sind zwei Bleche parallel zueinander wie eine Spirale aufgewickelt, wodurch zwei durchgehende Räume für das erste Fluid und das weitere Fluid mit einer großen Wärmeübertragungsfläche bereitgestellt werden können. Ähnlich wie der Plattenwärmeübertrager kann der Spiralwärmeübertrager einen hohen Wirkungsgrad aufweisen, wenn die beiden Bleche nah zueinander angeordnet sind, wobei auch hier die Anfälligkeit gegenüber Verschmutzungen zunimmt.

Insbesondere kann vorgesehen sein, dass der Wärmeübertrager 22 ein Plattenwärmeübertrager oder ein Spiralwärmeübertrager ist.

Bevorzugt kann weiters vorgesehen sein, dass Wärmeübertrager 22 eine minimale lichte Weite von maximal 30 mm, insbesondere maximal 10 mm, besonders bevorzugt maximal 3 mm, aufweist. Die minimale lichte Weite ist hierbei eine minimale innere geometrische Dimension des Wärmeübertragers 22. Die minimale lichte Weite entspricht hierbei insbesondere dem Durchmesser eines gedachten Teilchens, welche den Wärmeübertrager 22 gerade noch durchqueren kann. Bei einem Plattenwärmetauscher entspricht die minimale lichte Weite insbesondere einem Abstand zweier benachbarter Platten. Bei einem Spiralwärmeübertrager entspricht die minimale lichte Weite insbesondere einem Abstand der spiralförmigen Bleche zueinander. Durch diese geringe minimale lichte Weite des Wärmeübertragers 22 kann ein hoher Wirkungsgrad erzielt werden.

Die minimale lichte Weite des Wärmeübertragers 22 kann weiters bevorzugt maximal 1 mm betragen.

Insbesondere kann vorgesehen sein, dass ein Kaltwassereinlass 37 der Frischwasserleitung 36 eingangseitig mit einem Eingang des Wärmeübertragers 22 verbunden ist. Im Wärmeübertrager 22 nimmt das kalte Frischwasser als weiteres Fluid die Wärmeenergie von dem gereinigten Abwasser als erstes Fluid auf und verlässt den Wärmeübertrager 22 mit einer nur geringfügig, insbesondere maximal 3°C, kälteren Temperatur als das gereinigte Abwasser an einem Eingang des Wärmeübertragers 22.

Am Einlass des Wärmeübertragers 22 für das erste Fluid kann insbesondere eine Pumpe 38 angeordnet sein, welche mit einem Ventil 39 am Einlass des Wärmeübertragers 22 für das weitere Fluid schaltungstechnisch verbunden ist. Dadurch kann die Durchflussmenge der beiden Fluide im Wärmeübertrager 22 aufeinander abgestimmt werden.

Insbesondere kann vorgesehen sein, dass ein Ausgang des Wärmeübertragers 22 für das Frischwasser zumindest mittelbar mit dem zweiten Speicherbehälter 27 verbunden ist. In dem zweiten Speicherbehälter 27 kann das Frischwasser als zweites oder drittes Fluid auf für Warmwasser übliche Temperaturen erhitzt werden, insbesondere Temperaturen über 60°C. Der zweite Speicherbehälter 27 kann mit dem Abwassererzeuger 32 verbunden sein. Von der Zuleitung des zweiten Speicherbehälters 27 zu dem Abwassererzeuger 32 kann eine Zirkulationsleitung 41 zurück in den zweiten Speicherbehälter 27 führen, um ein Abkühlen des Frischwassers in der Zuleitung zu verhindern. Die Zirkulationsleitung 41 ist in Fig. 1 strichliniert dargestellt.

Der zweite Speicherbehälter 27 kann insbesondere eine Heizeinrichtung 40, insbesondere einen Heizkessel und/oder eine zusätzliche mit der Umgebung verbundene weitere Wärmepumpe, aufweisen. Dadurch kann die Temperatur im zweiten Speicherbehälter 27 zuverlässig über die Legionellen Schutztemperatur, insbesondere über 60°C, gehalten werden.

Weiters kann vorgesehen sein, dass ein Ende der Auslassleitung 10 zumindest mittelbar mit einer Kühleinrichtung verbunden ist, wobei das gereinigte Abwasser ein Kühlmedium der Kühleinrichtung ist. Die Kühleinrichtung kann insbesondere eine Gebäudekühlung sein, welche Gebäudekühlung bevorzugt eine Deckenkühlung ist. Dadurch kann das abgekühlte gereinigte Abwasser zusätzlich zur Kühlung des Gebäudes verwendet werden.

Weiters kann vorgesehen sein, dass das Ende der Auslassleitung 10 zumindest mittelbar mit einem ein Aufbewahrungsbehälter 42 verbunden ist. Der Aufbewahrungsbehälter 42 kann insbesondere Abflussleitungen 43 in den Kanal und /oder zu nicht Frischwasser benötigenden Einrichtungen des Gebäudes, vorzugsweise wie ein WC oder Maschinen wie eine Waschmaschine, aufweisen. Das gereinigte und insbesondere auch geruchsfreie Abwasser kann daher nach dessen thermischen Verwertung einer Vielzahl an möglichen Anwendungszwecken zugeführt werden, um den Bedarf des Gebäudes an Frischwasser gering zu halten. Der Aufbewahrungsbehälter 42 kann weiters einen Zulauf 44 für Frischwasser aufweisen sowie einen Überlauf 45.

## Patentansprüche

1. Wärmeübertragungsvorrichtung (1) umfassend eine Wärmepumpe (2) zum Übertragen von Wärme zwischen einem ersten Fluid und einem zweiten Fluid, wobei eine Vorlaufleitung (3) der Wärmepumpe (2) für das erste Fluid mit einem Speicherbehälter (4) verbunden ist, wobei der Speicherbehälter (4) mit einer Einlassleitung (5) für das erste Fluid verbunden ist, wobei eine Rücklaufleitung (6) der Wärmepumpe (2) mit dem Speicherbehälters (4) verbunden ist, wobei eine Steuereinrichtung mit zumindest einem Temperatursensor (11) zur Erfassung eines ersten Temperaturwertes des ersten Fluids an einer ersten Position der Wärmeübertragungsvorrichtung (1) ein Umschaltventil (7) steuert, wobei mittels der Steuereinrichtung abhängig von dem ersten Temperaturwert das Umschaltventil (7) zwischen einer ersten Stellung (8) und einer zweiten Stellung (9) schaltet, **dadurch gekennzeichnet, dass** in der Rücklaufleitung (6) das Umschaltventil (7) angeordnet ist, dass das Umschaltventil (7) in der ersten Stellung (8) das von der Wärmepumpe (2) rücklaufende erste Fluid in den Speicherbehälter (4) rückspeist, dass das Umschaltventil (7) in der zweiten Stellung (9) das von der Wärmepumpe (2) rücklaufende erste Fluid in eine Auslassleitung (10) umleitet.

2. Wärmeübertragungsvorrichtung (1) nach Anspruch 1, **dadurch gekennzeichnet, dass** die Steuereinrichtung so ausgebildet ist, dass das erste Fluid mit 1 bis 5°C über einem Gefrierpunkt des ersten Fluids ausgeschieden wird.

3. Wärmeübertragungsvorrichtung (1) nach Anspruch 1 oder 2, **dadurch gekennzeichnet, dass** in der Steuereinrichtung ein vorgebbarer erster Grenzwert gespeichert ist, dass die Steuereinrichtung das Umschaltventils (7) in die erste Stellung (8) schaltet, wenn der erste Temperaturwert größer ist als der erste Grenzwert und in die zweite Stellung (9) schaltet, wenn der erste Temperaturwert kleiner ist als der erste Grenzwert.

4. Wärmeübertragungsvorrichtung (1) nach einem der Ansprüche 1 bis 3, **dadurch gekennzeichnet, dass** der Temperatursensor (11) zur Erfassung des ersten Temperaturwertes an der Vorlaufleitung (3) der Wärmepumpe (2) angeordnet ist.

5. Wärmeübertragungsvorrichtung (1) nach einem der Ansprüche 1 bis 4, **dadurch gekennzeichnet, dass** eine Kreislaufleitung (12) die Rücklaufleitung (6) mit der Vorlaufleitung (3) verbindet, wobei ein Stellventil (14) in Abhängigkeit eines zweiten Temperaturwertes des ersten Fluids einen Durchfluss in der Kreislaufleitung (12) steuert, wobei insbesondere ein zweiter Temperatursensors (15) zur Bestimmung des zweiten Temperaturwertes an der Vorlaufleitung (3) vor der Wärmepumpe (2) angeordnet ist.

6. Wärmeübertragungsvorrichtung (1) nach einem der Ansprüche 1 bis 5, **dadurch gekennzeichnet, dass** in der Einlassleitung (5) ein Einlass-Mischer (16) mit einem ersten Eingang (17) für einen ersten Teil des erstes Fluid mit variabler Temperatur und einem zweiten Eingang (18) für einen zweiten Teil des erstes Fluid mit einer im Wesentlichen konstanten und kühleren Temperatur als der zweite Teil aufweist, wobei der Einlass-Mischer (16) in Abhängigkeit eines dritten Temperaturwertes des ersten Fluids gesteuert wird, wobei insbesondere ein dritter Temperatursensor (19) zur Bestimmung des dritten Temperaturwertes an der Einlassleitung (5) zwischen dem Einlass-Mischer (16) und dem Speicherbehälter (4) angeordnet ist.

7. Wärmeübertragungsvorrichtung (1) nach einem der Ansprüche 1 bis 6, **dadurch gekennzeichnet, dass** in dem Speicherbehälter (4) ein Füllstandmesser (20) angeordnet ist, und dass sich insbesondere bei einem Unterschreiten eines vorgegebenen Grenzfüllstandes die Wärmepumpe (2) abschaltet.

8. Wärmeübertragungsvorrichtung (1) nach einem der Ansprüche 1 bis 7, **dadurch gekennzeichnet, dass** der Speicherbehälter (4) einen Überlauf (21) aufweist.

9. Wärmeübertragungsvorrichtung (1) nach einem der Ansprüche 1 bis 8, **dadurch gekennzeichnet, dass** in der Einlassleitung (5) ein Wärmeübertrager (22) zwischen dem ersten Fluid und einem weiteren Fluid, insbesondere dem zweiten Fluid, angeordnet ist.

10. Abwasserwärmerückgewinnungssystem umfassend eine Reinigungsanlage (23) und die Wärmeübertragungsvorrichtung (1) nach einem der Ansprüche 1 bis 9, wobei die Reinigungsanlage (23) ausgebildet ist Abwasser aus einer Abwasserleitung (24) zu reinigen, wobei ein Ausgang der Reinigungsanlage (23) mit der Einlassleitung (5) der Wärmeübertragungsvorrichtung (1) verbunden ist, wobei das gereinigte Abwasser zumindest einen Teil des ersten Fluids darstellt, wobei die Wärmeübertragungsvorrichtung (1) ausgebildet ist Wärmeenergie von dem gereinigten Abwasser auf ein Frischwasser zu übertragen.

11. Verfahren zum Übertragen von Wärme zwischen einem ersten Fluid und einem zweiten Fluid mittels einer Wärmeübertragungsvorrichtung (1) gemäß einem der Ansprüche 1 bis 9, wobei das erste Fluid über eine Einlassleitung (5) diskontinuierlich in einen Speicherbehälter (4) eingebracht wird, wobei das ersten Fluid aus dem Speicherbehälter (4) zum Übertragen von Wärme zwischen dem ersten Fluid und dem zweiten Fluid durch eine Wärmepumpe (2) geleitet wird, wobei ein erster Temperaturwert des ersten Fluids an einer ersten Position der Wärmeübertragungsvorrichtung (1) erfasst wird, wobei in Abhängigkeit von dem ersten Temperaturwert das erste Fluid nach der Wärmepumpe (2) wieder in den Speicherbehälter (4) rückgespeist wird oder aus der Wärmeübertragungsvorrichtung (1) abgeführt wird.

12. Verfahren nach Anspruch 11, **dadurch gekennzeichnet, dass** das erste Fluid nach der Wärmepumpe (2) in den Speicherbehälter (4) rückgespeist wird, wenn der erste Temperaturwert größer als ein erster Grenzwert ist, und dass das erste Fluid nach der Wärmepumpe (2) aus der Wärmeübertragungsvorrichtung (1) abgeführt wird, wenn der erste Temperaturwert kleiner als der erster Grenzwert ist.

13. Verfahren nach Anspruch 11 oder 12, **dadurch gekennzeichnet, dass** in Abhängigkeit eines zweiten Temperaturwertes des ersten Fluids vor der Wärmepumpe (2), insbesondere wenn der zweite Temperaturwert einen zweiten Grenzwert überschreitet, zumindest ein Teil des ersten Fluids nach der Wärmepumpe (2) wieder unmittelbar der Wärmepumpe (2) zugeführt wird.

14. Verfahren nach einem der Ansprüche 11 bis 13, **dadurch gekennzeichnet, dass** in Abhängigkeit eines dritten Temperaturwertes des ersten Fluids in der Einlassleitung (5) vor dem Speicherbehälter (4), insbesondere wenn der dritte Temperaturwert einen dritten Grenzwert überschreitet, in der Einlassleitung (5) ein erster Teil des ersten Fluids mit variablen Temperatur ein zweiter Teil des ersten Fluids mit im Wesentlichen konstanter und kühleren Temperatur als der erste Teil beigemischt wird.

15. Verfahren zur Wärmerückgewinnung aus Abwasser, wobei das Abwasser in einer Reinigungsanlage (23) gereinigt wird, wobei das in der Reinigungsanlage gereinigte Abwasser der Wärmeübertragungsvorrichtung (1) zugeführt wird, wobei in der Wärmeübertragungsvorrichtung (1) mit einem Verfahren gemäß einem der Ansprüche 11 bis 14 Wärmeenergie von dem gereinigten Abwasser zumindest als Teil des ersten Fluids an ein Frischwasser übertragen wird.

## Claims

1. Heat transfer device (1) comprising a heat pump (2) for transferring heat between a first fluid and a second fluid, whereby a supply line (3) of the heat pump (2) for the first fluid being connected to a storage tank (4), whereby the storage tank (4) being connected to an inlet line (5) for the first fluid, wherein a return line (6) of the heat pump (2) is connected to the storage tank (4), wherein a control device with at least one temperature sensor (11) for detecting a first temperature value of the first fluid at a first position of the heat transfer device (1) controls a changeover valve (7), whereby the control device switching the changeover valve (7) between a first position (8) and a second position (9) as a function of the first temperature value, **characterized in that** the changeover valve (7) is arranged in the return line (6), **in that**, in the first position (8), the changeover valve (7) feeds the first fluid returning from the heat pump (2) back into the storage tank (4), **in that**, in the second position (9), the changeover valve (7) diverts the first fluid returning from the heat pump (2) into an outlet line (10).

2. Heat transfer device (1) according to claim 1, **characterized in that** the control device is embodied in such a way that the first fluid is discharged at 1 to 5°C above a freezing point of the first fluid.

3. Heat transfer device (1) according to claim 1 or 2, **characterized in that** a predeterminable first limit value is stored in the control device, **in that** the control device switches the changeover valve (7) to the first position (8) when the first temperature value is greater than the first limit value and switches to the second position (9) when the first temperature value is less than the first limit value.

4. Heat transfer device (1) according to one of claims 1 to 3, **characterized in that** the temperature sensor (11) for detecting the first temperature value is arranged on the supply line (3) of the heat pump (2).

5. Heat transfer device (1) according to one of claims 1 to 4, **characterized in that** a circulation line (12) connects the return line (6) to the supply line (3), whereby a control valve (14) controlling a flow in the circulation line (12) as a function of a second temperature value of the first fluid, whereby in particular a second temperature sensor (15) for determining the second temperature value being arranged on the supply line (3) upstream of the heat pump (2).

6. Heat transfer device (1) according to one of claims 1 to 5, **characterized in that** the inlet line (5) has an inlet mixer (16) with a first inlet (17) for a first part of the first fluid with a variable temperature and a second inlet (18) for a second part of the first fluid with a substantially constant and cooler temperature than the second part, whereby the inlet mixer (16) being controlled as a function of a third temperature value of the first fluid, in particular a third temperature sensor (19) for determining the third temperature value being arranged on the inlet line (5) between the inlet mixer (16) and the storage tank (4).

7. Heat transfer device (1) according to one of claims 1 to 6, **characterized in that** a level gauge (20) is arranged in the storage tank (4), and **in that** the heat pump (2) switches off in particular when the level falls below a predetermined limit level.

8. Heat transfer device (1) according to one of claims 1 to 7, **characterized in that** the storage tank (4) has an overflow (21).

9. Heat transfer device (1) according to one of claims 1 to 8, **characterized in that** a heat exchanger (22) is arranged in the inlet line (5) between the first fluid and a further fluid, in particular the second fluid.

10. Waste water heat recovery system comprising a purification plant (23) and the heat transfer device (1) according to one of claims 1 to 9, wherein the purification plant (23) is embodied to purify waste water from a waste water line (24), wherein an outlet of the purification plant (23) is connected to the inlet line (5) of the heat transfer device (1), wherein the purified waste water constitutes at least a part of the first fluid, wherein the heat transfer device (1) is embodied to transfer heat energy from the purified waste water to a fresh water.

11. Method for transferring heat between a first fluid and a second fluid by means of a heat transfer device (1) according to any one of claims 1 to 9, wherein the first fluid is discontinuously introduced into a storage tank (4) via an inlet pipe (5), wherein the first fluid is passed from the storage tank (4) through a heat pump (2) for transferring heat between the first fluid and the second fluid, wherein a first temperature value of the first fluid is detected at a first position of the heat transfer device (1), wherein, depending on the first temperature value, the first fluid is fed back into the storage tank (4) after the heat pump (2) or is discharged from the heat transfer device (1).

12. Method according to claim 11, **characterized in that** the first fluid is fed back into the storage tank (4) after the heat pump (2) if the first temperature value is greater than a first limit value, and **in that** the first fluid is discharged from the heat transfer device (1) after the heat pump (2) if the first temperature value is less than the first limit value.

13. Method according to claim 11 or 12, **characterized in that,** depending on a second temperature value of the first fluid upstream of the heat pump (2), in particular if the second temperature value exceeds a second limit value, at least part of the first fluid downstream of the heat pump (2) is fed back directly to the heat pump (2).

14. Method according to one of claims 11 to 13, **characterized in that,** depending on a third temperature value of the first fluid in the inlet line (5) upstream of the storage tank (4), in particular if the third temperature value exceeds a third limit value, a first part of the first fluid with a variable temperature is admixed in the inlet line (5) with a second part of the first fluid with a substantially constant and cooler temperature than the first part.

15. Method for heat recovery from waste water, wherein the waste water is purified in a purification plant (23), wherein the waste water purified in the purification plant is fed to the heat transfer device (1), wherein in the heat transfer device (1) heat energy is transferred from the purified waste water at least as part of the first fluid to a fresh water by a method according to any one of claims 11 to 14.

## Revendications

1. Dispositif de transfert de chaleur (1) comprenant une pompe à chaleur (2) pour transférer la chaleur entre un premier fluide et un second fluide, une conduite d'alimentation (3) de la pompe à chaleur (2) pour le premier fluide étant reliée à un réservoir de stockage (4), le réservoir de stockage (4) étant relié à une conduite d'entrée (5) pour le premier fluide, dans lequel une conduite de retour (6) de la pompe à chaleur (2) est reliée au réservoir de stockage (4), dans lequel un dispositif de commande doté d'au moins un capteur de température (11) pour détecter une première valeur de température du premier fluide dans une première position du dispositif de transfert de chaleur (1) commande une vanne d'inversion (7), le dispositif de commande commute la vanne de commutation (7) entre une première position (8) et une deuxième position (9) en fonction de la première valeur de température, **caractérisé en ce que** la vanne de commutation (7) est disposée dans la conduite de retour (6), en ce sens que, dans la première position (8), la vanne de commutation (7) alimente la conduite de retour (6) en liquide, la vanne de commutation (7) renvoie le premier fluide de la pompe à chaleur (2) dans le réservoir de stockage (4), **en ce que**, dans la deuxième position (9), la vanne de commutation (7) détourne le premier fluide de la pompe à chaleur (2) vers une conduite de sortie (10).

2. Dispositif de transfert de chaleur (1) selon la revendication 1, **caractérisé par le fait que** le dispositif de commande est conçu de manière à ce que le premier fluide soit évacué à une température de 1 à 5°C au-dessus du point de congélation du premier fluide.

3. Dispositif de transfert de chaleur (1) selon la revendication 1 ou 2, **caractérisé en ce qu'**une première valeur limite prédéterminable est stockée dans le dispositif de commande, **en ce que** le dispositif de commande commute la vanne de commutation (7) dans la première position (8) lorsque la première valeur de température est supérieure à la première valeur limite et commute dans la deuxième position (9) lorsque la première valeur de température est inférieure à la première valeur limite.

4. Dispositif de transfert de chaleur (1) selon l'une des revendications 1 à 3, **caractérisé par le fait que** le capteur de température (11) pour détecter la première valeur de température est disposé sur la conduite d'alimentation (3) de la pompe à chaleur (2).

5. Dispositif de transfert de chaleur (1) selon l'une des revendications 1 à 4, **caractérisé en ce qu'**une conduite de circulation (12) relie la conduite de retour (6) à la conduite d'alimentation (3), une vanne de régulation (14) régulant un débit dans la conduite de circulation (12) en fonction d'une deuxième valeur de température du premier fluide, un deuxième capteur de température (15) pour déterminer la deuxième valeur de température étant notamment disposé sur la conduite d'alimentation (3) en amont de la pompe à chaleur (2).

6. Dispositif de transfert de chaleur (1) selon l'une des revendications 1 à 5, **caractérisé en ce que** la conduite d'entrée (5) comporte un mélangeur d'entrée (16) avec une première entrée (17) pour une première partie du premier fluide à température variable et une deuxième entrée (18) pour une deuxième partie du premier fluide à température sensiblement constante et plus froide que la deuxième partie, le mélangeur d'entrée (16) étant commandé en fonction d'une troisième valeur de température du premier fluide, en particulier un troisième capteur de température (19) pour déterminer la troisième valeur de température étant disposé sur la conduite d'entrée (5) entre le mélangeur d'entrée (16) et le réservoir de stockage (4).

7. Dispositif de transfert de chaleur (1) selon l'une des revendications 1 à 6, **caractérisé en ce qu'**une jauge de niveau (20) est disposée dans le réservoir de stockage (4), et **en ce que** la pompe à chaleur (2) s'arrête en particulier lorsque le niveau tombe en dessous d'un niveau limite prédéterminé.

8. Dispositif de transfert de chaleur (1) selon l'une des revendications 1 à 7, **caractérisé en ce que** le réservoir de stockage (4) comporte un trop-plein (21).

9. Dispositif de transfert de chaleur (1) selon l'une des revendications 1 à 8, **caractérisé en ce qu'**un échangeur de chaleur (22) est disposé dans la conduite d'entrée (5) entre le premier fluide et un autre fluide, en particulier le second fluide.

10. Système de récupération de chaleur des eaux usées comprenant une station d'épuration (23) et le dispositif de transfert de chaleur (1) selon l'une des revendications 1 à 9, dans lequel la station d'épuration (23) est conçue pour épurer les eaux usées provenant d'une conduite d'eaux usées (24), dans lequel une sortie de la station d'épuration (23) est reliée à la conduite d'entrée (5) du dispositif de transfert de chaleur (1), dans lequel les eaux usées épurées constituent au moins une partie du premier fluide, dans lequel le dispositif de transfert de chaleur (1) est conçu pour transférer l'énergie thermique des eaux usées épurées à de l'eau fraîche.

11. Procédé de transfert de chaleur entre un premier fluide et un second fluide au moyen d'un dispositif de transfert de chaleur (1) selon l'une quelconque des revendications 1 à 9, dans lequel le premier fluide est introduit de manière discontinue dans un réservoir de stockage (4) via un tuyau d'entrée (5), dans lequel le premier fluide passe du réservoir de stockage (4) à travers une pompe à chaleur (2) pour transférer la chaleur entre le premier fluide et le second fluide, dans lequel une première valeur de température du premier fluide est détectée à une première position du dispositif de transfert de chaleur (1), dans lequel, en fonction de la première valeur de température, le premier fluide est renvoyé dans le réservoir de stockage (4) après la pompe à chaleur (2) ou est évacué du dispositif de transfert de chaleur (1).

12. Procédé selon la revendication 11, **caractérisé par le fait que** le premier fluide est réintroduit dans le réservoir de stockage (4) après la pompe à chaleur (2) si la première valeur de température est supérieure à une première valeur limite, et **par le fait que** le premier fluide est évacué du dispositif de transfert de chaleur (1) après la pompe à chaleur (2) si la première valeur de température est inférieure à la première valeur limite.

13. Procédé selon la revendication 11 ou 12, **caractérisé en ce que**, en fonction d'une deuxième valeur de température du premier fluide en amont de la pompe à chaleur (2), en particulier si la deuxième valeur de température dépasse une deuxième valeur limite, au moins une partie du premier fluide en aval de la pompe à chaleur (2) est renvoyée directement à la pompe à chaleur (2).

14. Procédé selon l'une des revendications 11 à 13, **caractérisé en ce que**, en fonction d'une troisième valeur de température du premier fluide dans la conduite d'entrée (5) en amont du réservoir de stockage (4), en particulier si la troisième valeur de température dépasse une troisième valeur limite, une première partie du premier fluide à température variable est mélangée dans la conduite d'entrée (5) avec une deuxième partie du premier fluide à température sensiblement constante et plus froide que la première partie.

15. Procédé de récupération de chaleur à partir d'eaux usées, dans lequel les eaux usées sont purifiées dans une station d'épuration (23), dans lequel les eaux usées purifiées dans la station d'épuration sont acheminées vers le dispositif de transfert de chaleur (1), dans lequel, dans le dispositif de transfert de chaleur (1), l'énergie thermique est transférée des eaux usées purifiées, au moins en partie du premier fluide, à de l'eau fraîche, par un procédé conforme à l'une quelconque des revendications 11 à 14.
